(19) Europäisches Patentamt
European Patent Office
Office européen des brevets

(11) Publication number: 0 409 480 A2

(12) EUROPEAN PATENT APPLICATION

(21) Application number: 90307600.8

(51) Int. Cl.5: B01D 53/34

(22) Date of filing: 11.07.90

(30) Priority: 19.07.89 US 382133

(43) Date of publication of application: 23.01.91 Bulletin 91/04

(84) Designated Contracting States: DE GB

(71) Applicant: MOBIL OIL CORPORATION
3225 Gallows Road
Fairfax Virginia 22037(US)

(72) Inventor: Fieler, Eleanor R.
6510 Brentield Drive
Dallas, Texas 75248(US)
Inventor: Snavely, Earl S.
2610 Oak Cliff Lane
Arlington, Texas 76012(US)

(74) Representative: Curtis, Philip Anthony (GB)
Patent Department, Mobil Court 3 Clements Inn
London WC2A 2EB(GB)

# (54) Method of removing hydrogen sulfide from a gas.

(57) The present invention provides a method of removing hydrogen sulfide ($H_2S$) from a gas by contacting the gas in a reaction zone with a reaction solution of a chelated polyvalent metal, thereby producing elemental sulfur (S), removing the elemental sulfur, regenerating the reaction solution by contacting it with oxygen produced electrolytically, and recycling the regenerated reaction solution to the reaction zone.

FIG. 1

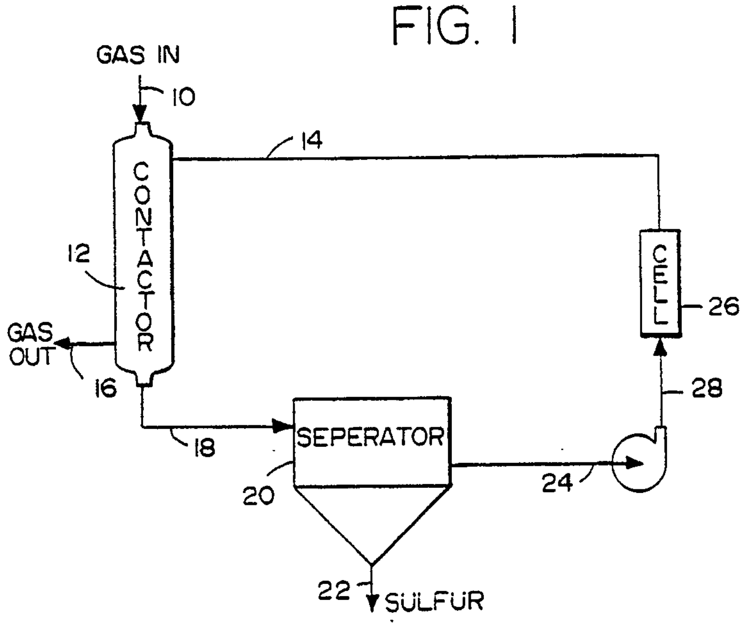


EP 0 409 480 A2

# METHOD OF REMOVING HYDROGEN SULFIDE FROM A GAS

The invention is directed to an improved method of removing hydrogen sulfide from a gas. More particularly, the invention is directed to a method of electrolytically regenerating aqueous polyvalent metal chelating solutions that are used to extract $H_2S$ from gas streams and oxidize it to elemental sulfur.

The removal of hydrogen sulfide ($H_2S$) from gaseous streams, such as the waste gases liberated in the course of various chemical and industrial processes, for example, in the pulping of wood, natural gas and crude oil production and in petroleum refining, has become increasingly important in combating atmospheric pollution. Hydrogen sulfide-containing gases not only have an offensive odour, but such gases may cause damage to vegetation, painted surfaces and wildlife, as well as constitute a significant health hazard to humans. Government regulations have increasingly imposed continuously lower tolerances on the content of hydrogen sulfide which can be vented to the atmosphere, and it is now imperative in many localities to remove virtually all of the hydrogen sulfide under the penalty of an absolute ban on continuing operation of commercial plants which produce the hydrogen sulfide-containing gaseous streams.

The quantities of hydrogen sulfide in process gas streams are normally not very high. U.S. Patent number 3,071,433, dated January 1, 1964 to Dunn, indicates that the stack gases obtained in the concentration of black liquor, the waste pulping liquor of the Kraft pulping process, contain from 500 to 2000 parts per million (ppm) of hydrogen sulfide. However, the odour of hydrogen sulfide can be detected by humans at a concentration of approximately 0.01 ppm. Consequently, an extremely efficient process for the removal of hydrogen sulfide is required to eliminate small amounts of noxious hydrogen sulfide from process gases.

It is known to effect the removal of hydrogen sulfide in an oxidation-reduction system by contacting the hydrogen sulfide-containing gas stream with a solution of a polyvalent cation (such as iron) complexed with a chelating agent (such as ethylenediaminetetraacetic acid or sodium salt thereof). In such a process, iron in the ferric state oxidizes the hydrogen sulfide to sulfur, the iron is reduced to the ferrous state, and the solution is regenerated by aeration to convert the iron to the ferric state.

U.S. Patent number 4,784,838 to Paul et al discloses a cyclic process for removing $H_2S$ from a gaseous stream comprising contacting the gaseous stream with a solution of a chelated polyvalent metal containing a free chelating agent to produce elemental sulfur, removing the elemental sulfur, and regenerating the reaction solution e.g., by contacting it with oxygen, and recycling the regenerated solution to the reaction zone. The free chelating agent eliminates the loss of the polyvalent metal and the chelating polyvalent metal from the reaction solution.

In a copending application serial number 340,742, (Mobil Docket number 5339), filed April 20, 1989, there is disclosed a process for removing $H_2S$ from a gaseous stream which inherently contains oxygen comprising contacting the gaseous stream with a solution containing a chelated polyvalent metal and a free chelating agent to produce elemental sulfur and wherein the reaction solution is regenerated in-situ by the oxygen present in the gaseous stream. In-situ regeneration requires the oxygen concentration in the gaseous stream to be equal to or greater than the stoichometric amount required to oxidize the $H_2S$ in the raw gas to sulfur. If the ratio of oxygen to hydrogen sulfide in the gaseous stream is insufficient to regenerate in-situ the polyvalent metal chelate, sufficient oxygen is added to the gaseous stream to regenerate in-situ the polyvalent metal chelate.

A need still exists in the art to provide a more efficient, simple and economic method of regenerating the aqueous polyvalent chelating solutions used to remove hydrogen sulfide from a gas.

The present invention provides a method of removing hydrogen sulfide ($H_2S$) from a gas by contacting the gas in a reaction zone with a reaction solution of a chelated polyvalent metal, thereby producing a reduced metal chelate solution and elemental sulfur (S), separating the elemental sulfur from the reduced metal chelate solution, subjecting the reduced metal chelate solution to electrolysis that produces a sufficient amount of oxygen to regenerate the reduced metal chelate, and recycling the regenerated reaction solution to the reaction zone.

The elemental sulfur is typically dispersed in the chelate solution in the form of elemental sulfur particles.

Further features of the invention are defined in dependent claims 2 to 11.

Reference is now made to the accompanying drawings, in which: Figure 1 is a schematic diagram of the present invention illustrating the routes of the various process streams; and figure 2 is a schematic diagram of the electrolytic cell used to regenerate the reduced polyvalent metal chelate solution.

The polyvalent metal chelate solutions used to extract hydrogen sulfide from gas streams and oxidize it to elemental sulfur, are regenerated electrolytically rather than by bubbling the solutions with air or by

adding air to the gas stream.

The polyvalent metal chelate solutions employed in the process of the invention are coordination complexes in which the polyvalent metals form chelates with amino acids having one of the following general formulae:

$(D)_{3-n}$-N-$(X)_n$

Wherein

n is a number from 1 to 3;

x is selected from the class consisting of acetic acid propionic acid groups;

D is 2-hydroxy ethyl, 2-hydroxy propyl, or an alkyl group having from 1 to about 4 carbon atoms; or

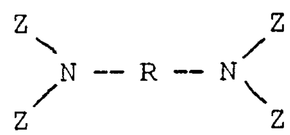

(II)

Wherein

from two to four of the groups Z are selected from the class consisting of acetic and propionic acid groups;

from zero to two of the groups Z are selected from the class consisting of 2-hydroxy ethyl, 2-hydroxy propyl, and

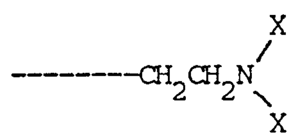

R is ethylene, propylene or isopropylene or, alternatively, cyclohexane or benzene, where the two hydrogen atoms replaced by nitrogen are in the 1,2-position.

As the polyvalent metal, any polyvalent metal that exists in more than one oxidation stage can be used, but iron, copper and manganese are preferred, especially iron. The polyvalent metal should be capable of oxidizing hydrogen sulfide, while being reduced itself from a higher to a lower valence state and should then be oxidizable by oxygen from the lower valence state to the higher valence state, in a typical redox reaction. Other polyvalent metals which can be used include lead, mercury, palladium, platinum, tungsten, nickel, chromium, cobalt, vanadium, titanium, tantalum, zirconium, molybdenum and tin.

The polyvalent metal chelates are readily formed in aqueous solution by reaction of an appropriate salt, oxide or hydroxide of the polyvalent metal and chelating agent in the acid form or an alkali metal or ammonium salt thereof. Exemplary chelating agents include amino acetic acids derived from ammonia or 2-hydroxy alkylamines, such as glycine, diglycine (amino diacetic acid), NTA (nitrilo triacetic acid), 2-hydroxy alkyl glycine; di-hydroxyalkyl glycine, and hydroxyethyl or hydroxypropyl diglycine; amino acetic acids derived from ethylene diamine, diethylene triamine, 1,2-propylene diamine, and 1,3-propylene diamine, such as EDTA (ethylene diamine tetraacetic acid), ETPA (ethylene triamine pentaacetic acid); amino acetic derivatives of cyclic 1,2-diamines, such as 1,2-diamino cyclohexane-N, N-tetraacetic acid, and the amindes of polyamino acetic acids disclosed in U.S. Patent number 3,580,950 to Bersworth.

A quantitative reaction is obtained at room temperature, so that there is no need to employ higher temperatures. However, higher temperatures can be used, if desired or necessary. For instance, hot gases can be treated provided that care is taken to compensate for the water lost by evaporation. The metal chelate solution is stable to at least about 100° C., and thus the reaction can be carried out at elevated temperatures, to at least about 100° C.

The pH of the system should be within the range from about 7 to about 11. The upper limit is present only because the metal chelate solutions are not stable at pH's higher than 11. However, the higher the pH the more efficient is the absorption of $H_2S$ by the chelate solution; thus, if a metal chelate could be found to be stable at a pH higher than 11, such a metal chelate may be used. The most efficient range for a given set of conditions is from a pH of about 8 to about 10.5. If the chelate solution is acidic in the initial makeup or as a result of side reactions, it is necessary to buffer the solution by adjusting the pH to within the appropriate range by addition of an alkali metal hydroxide, for example, sodium hydroxide, an alkali metal or ammonium carbonate or bicarbonate or ammonium hydroxide.

Any gas-liquid contact system which ensures good contact between the hydrogen sulfide-containing gas phase and liquid phase containing the metal chelate can be used. In either a continuous or intermittent

flow system, concurrent, countercurrent, and cross-flows can be used. A preferred gas-liquid contact system is a static mixer which comprises a hollow tube having fixed internal baffles, no moving parts and no external power requirement other than required to cause flow. The particular baffle design uses blends or disperses all flowable materials with predictable precision. Many such static mixers are commercially available. The contact time between the gas and liquid phases in the static mixer is controlled by controlling the velocity of the streams and the length of the static mixer.

The hydrogen sulfide in a gaseous stream is oxidized to elemental sulfur by contacting the gaseous stream with a polyvalent metal chelate solution, wherein the contact time is sufficient to allow the polyvalent metal chelate to oxidize the hydrogen sulfide to elemental sulfur or precipitate. Thereafter, a gas phase of reduced hydrogen sulfide content is separated from the liquid phase containing reduced metal chelate solution having dispersed therein elemental sulfur particles. The elemental sulfur is then separated from the liquid phase and sulfur particles recovered from the solution. The reduced metal chelate solution is pumped through an electrolytic regeneration cell, where the chelate is regenerated (oxidized to the higher metal state).

This invention can best be understood with reference to the cyclic system for removal of hydrogen sulfide from a gaseous stream, as illustrated in Figure 1. A hydrogen sulfide-containing gas stream 10 enters a contactor 12. A ferric chelate solution having a pH of about 7 enters the contactor 12 via line 14. The contact time between the gas and liquid phases in the contactor 12 is about 2 seconds. The contact time is controlled by controlling the flow rate of the gas and liquid streams into the contactor 12, which has a fixed length and internal diameter. In the contactor 12, the hydrogen sulfide in the inlet gas is oxidized instantaneously to elemental sulfur by the metal chelate solution. The sulfur solids precipitate as a slurry in the treating solution. A gas essentially freed of hydrogen sulfide leaves the contactor 10 through line 16. The liquid containing the reduced ferrous chelate and sulfur solids from contactor 12 is piped via stream 18 to a separator 20 wherein the sulfur particles are separated by conventional separation processes such as filtration, flotation, and the like. The sulfur particles are withdrawn from separator 20 via line 22. The reduced ferrous chelate solution is removed from the separator 20 via line 24 and pumped to an electrolytic cell 26 via line 28.

As illustrated in figure 2, the electrolytic cell 26 comprises a pipe wall 30, a porous separator 32, an insulated seal 34, a rectifier 36, an anode 38 and a cathode 40.

The anodes and cathodes used in the electrolytic cell 26 can be any inert electrically conductive material selected from the group consisting of platinum, palladium, monel, carbon, platinized titanium and carbon-filled plastic.

The electrolytic cell 26 forms oxygen and hydrogen by the electrolysis of water according to Faraday's Law. Some of the ferrous chelate ([FeX]+ +) in the solution might be oxidized at the anode but most of the current forms oxygen because the concentration of [FeX]+ + is small. The oxygen that is formed by electrolysis oxidizes the [[FeX]+ + to [FeX]+ + + so that it is immaterial if some of the [FeX]+ + is oxidized at the anode. Hydrogen gas is formed at the cathode of the electrolysis cell and this can be combined with the treated gas or it can be vented. Some of the[FeX]+ + + might be reduced at the cathode thereby decreasing efficiency; therefore, the cathode and anode are separated by a porous barrier.
The reactions for the complete system are as follows:
absorption: $H_2S + OH^- \rightarrow HS^- + H_2O$
oxidation: $HS^- + 2[FeX]^{+++} \rightarrow SO^{+}\ 2[FeX]^{++} + H^{+}$
regeneration: $2[FeX]^{++} + 1/2\ O_2 + 2H^{+} \rightarrow 2[FeX]^{+++} + H_2O$
anode: $H_2O - 2e \rightarrow 1/2\ O_2 + 2H^{+}$
cathode: $2H^{+} + 2e \rightarrow H_2$
overall net reaction: $H_2S \rightarrow SO + H_2$
wherein e is an electron

Faraday's Law states that 96,487.0 (± 1.6) or about 96,500 coulombs will deposit (or oxidize, or reduce) one gram-equivalent of any substance by electrolysis. In terms of gram equivalents or equivalent weight, the equivalent of species that are oxidized or reduced in the iron chelate oxidation of hydrogen sulfide is as follows:
$[FeX]^{+++} = O_2/4 = H_2S/2 = 96{,}500$ coulombs (1)
Since a coulomb is one ampere-second, then the current required for oxidizing any of the substances in equation (1) can be calculated as follows:

1. The electrical current equivalent to oxidizing one ppm (by volume) of $H_2S$ in one million cubic feed (28320 $M^3$/day) of gas per day is as follows:
$H_2S - 2e \rightarrow S^{O} + 2H^{+}$
The gas contains $2.78 \times 10^{-3}$ 1b-mole or 2.52 grams-equivalent of $H_2S$.

$$i = current = \frac{2.52X96,500}{24X60X60} = 2.82 \text{ amperes}$$

2. One million cubic feed per day (28320 $M^3$/day) of gas containing one ppm (by volume) of $H_2S$ requires 2.52 gram-equivalents per day of $[FeX]^{+++}$ to oxidize the $H_2S$. The current required to oxidize the required amount of $[FeX]^{++}$ to $[FeX]^{+++}$ is as follows:

$$i = \frac{2.5X96,500}{24X60X60} = 2.82 \text{ amperes}$$

3. One million cubic feet of gas per day (28320 $M^3$/day) containing one ppm (by volume) of $H_2S$ requires 2.52 gram-equivalents per day of oxygen to oxidize the $H_2S$. The current required to form 2.52 gram-equivalents of $O_2$ per day is:

$$i = \frac{2.52X96,50}{24X60X60} = 2.82 \text{ amperes}$$

Therefore, 2.82 amperes will form 2.52 gram-equivalents of oxygen which will oxidize 2.52 gram-equivalents of ferrous ion to ferric ion in solution which will oxidize 1 pm of hydrogen sulfide in one million cubic feed of gas per day (28320 $M^3$/day) to elemental sulfur.

The regenerated solution is pumped from the electrolytic cell 26 back to the contactor 12 via line 14. Iron chelate solution make-up and pH adjusting solution are stored in tanks (not shown) and can be pumped into the system when needed.

The electrical current required for regeneration at 100% efficiency is equivalent to the oxidation of the $H_2S$ in the gas stream according to Faraday's Laws as discussed above. For example, 1,000,000 $ft^3$/day (28320 $M^3$/day) gas containing 100 ppm $H_2S$ by volume would require an electrical current of 282 amperes for regeneration. The voltage required for the electrolytic cell is determined by the redox potential of the electrode reactions, being 1.23 volts for the decomposition of water to hydrogen and oxygen, and the voltage drop of the current through the solution which is expected to be several volts. Assuming the total voltage to be 5 volts, then an electrical regeneration cell for the cited example would consume 1085 watts of electrical power. This power consumption is advantageous over the contamination of a gas with oxygen or the mechanical power required for the external regeneration of a solution with air.

The process of the present invention is applicable to any gaseous stream containing hydrogen sulfide in any concentration, even in very low concentrations of the order of a few parts per million. Examples of gaseous streams which contain hydrogen sulfide include sour gases and waste gases from petroleum refining, shale oil and tar sands processing, coal gasification, gases recovered during crude oil and natural gas production, stack gases from cellulose pulping processes, gaseous effluents from sewage disposal plants, tail gases from Claus Process units, and hydrogen sulfide waste gases from other chemical and industrial process.

Although the present invention has been described with preferred embodiments, it is to be understood that modifications and variations may be within the scope of the appended claims.

## Claims

1. A method of removing hydrogen sulfide ($H_2S$) from a gas comprising contacting the gas in a reaction zone with a reaction solution of a chelated polyvalent metal, thereby producing a reduced metal chelate solution and elemental sulfur (S), separating the elemental sulfur from the reduced metal chelate solution, subjecting the reduced metal chelate solution to electrolysis that produces a sufficient amount of oxygen to regenerate the reduced metal chelate, and recycling the regenerated reaction solution to the reaction zone.

2. A method according to claim 1, wherein the polyvalent metal is iron.

3. A method according to claim 1 or 2, wherein the chelated polyvalent metal is a coordination complex in which the polyvalent metal forms chelates with amino acids having one of the following two formulae:

$(D)_{3-n}$-N-$(X)_n$
wherein
n is a number from 1 to 3.
X is selected from the class consisting of acetic acid propionic acid groups;
D is 2-hydroxy ethyl, 2-hydroxy propyl, or an alkyl group having from 1 to about 4 carbon atoms; or

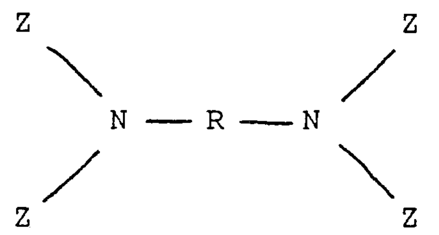

(II)

wherein from two to four of the groups Z are selected from the class consisting of acetic and propionic acid groups; from zero to two of the groups Z are selected from the class consisting of 2-hydroxy ethyl, 2-hydroxy propyl, and

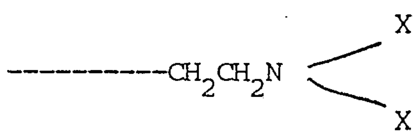

R is ethylene, propylene or isopropylene, cyclohexane or benzene, where the two hydrogen atoms replaced by nitrogen are in the 1,2-position, and
X is as defined above.

4. A method according to claim 3, wherein the chelating agent is at least one amino acetic acid derived from ethylene diamine, diethylene triamine, 1,2-propylene diamine or 1,3-propylene diamine.

5. A method according to claim 4, wherein the chelating agent is ethylene diamine tetraacetic acid (EDTA), ethylene triamine pentaacetic acid (ETPA), 2-hydroxy ethylethylene diamine triacetic acid (DEEDTA) or diethylene triamine pentaacetic acid (HETPA).

6. A method according to claim 5, wherein the chelating agent is EDTA or HEEDTA.

7. A method according to any preceding claim wherein the reaction solution is an aqueous solution.

8. A method according to any preceding claim wherein the step of subjecting the reduced metal chelate solution to electrolysis comprises contacting the reduced metal chelate solution with an anode and a cathode separated by a porous barrier in an electrolytic cell, and passing an electric current between the anode and cathode to form sufficient oxygen at the anode to regenerate the reduced metal chelate.

9. A method according to claim 8, wherein the electrical current required for 100% regeneration of the metal chelate is equivalent to the oxidation of the hydrogen sulfide ($H_2S$) in the gas stream according to Faraday's Law.

10. A method according to claim 9, wherein 2.82 amperes of electrical current is required to oxidize one ppm (by volume) of $H_2S$ in one million cubic feet of gas per day (28320 $M^3$/day).

FIG. 1

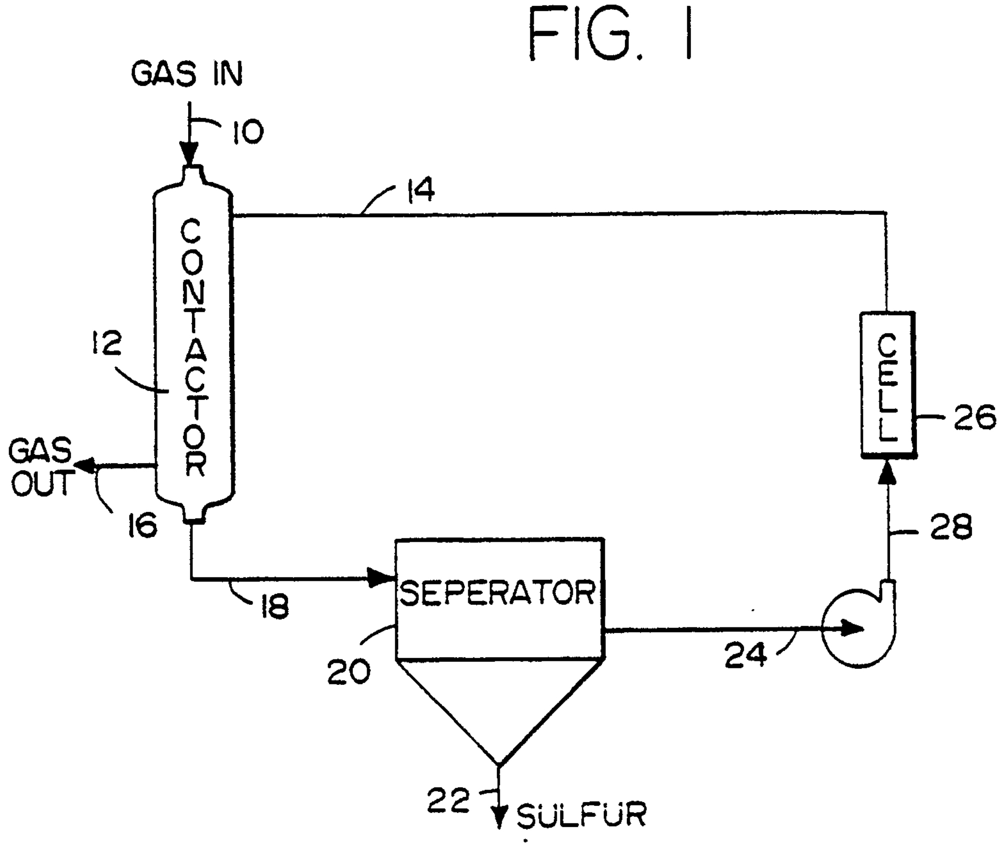
GAS IN
10
14
CONTACTOR
12
GAS OUT
16
CELL
26
28
SEPERATOR
18
20
24
22
SULFUR

FIG. 2

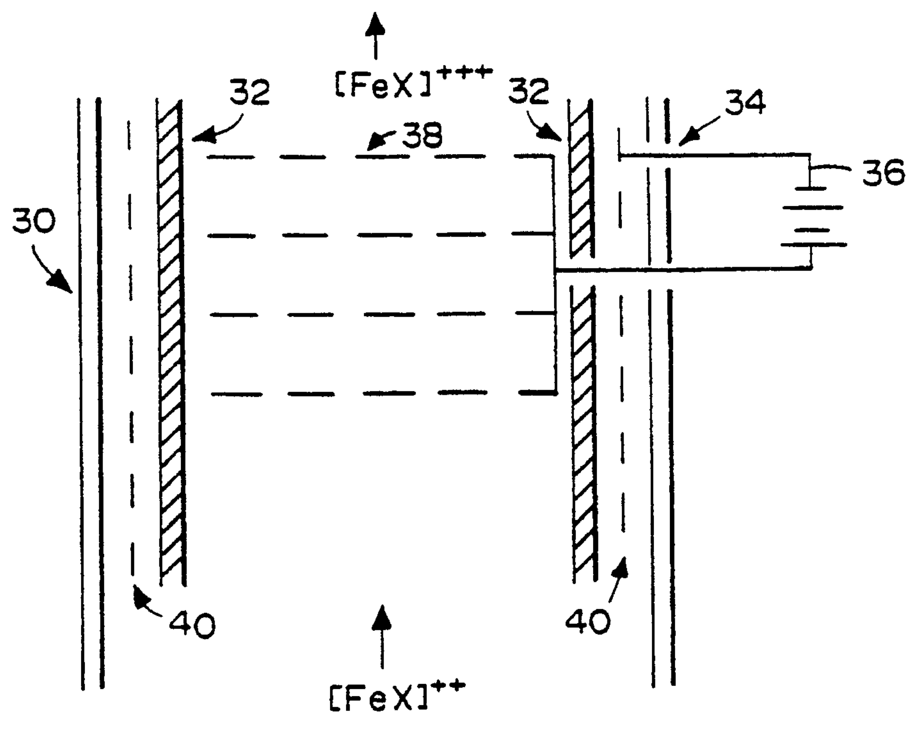
[FeX]+++
32
32
34
38
36
30
40
40
[FeX]++